# EUROPÄISCHE PATENTSCHRIFT

(11) **EP 2 059 738 B1**
(45) Veröffentlichungstag und Bekanntmachung des Hinweises auf die Patenterteilung: **11.10.2017**
(21) Anmeldenummer: 07788280.1
(22) Anmeldetag: 07.08.2007
(51) Int. Cl.: F25D 17/04, F25D 21/04

(54) **KÄLTEGERÄT MIT DRUCKAUSGLEICHSVENTIL**
REFRIGERATOR WITH A PRESSURE-COMPENSATION VALVE
APPAREIL FRIGORIFIQUE AVEC SOUPAPE DE COMPENSATION DE PRESSION

(30) Priorität: 29.08.2006 DE 102006040381
(43) Veröffentlichungstag der Anmeldung: 20.05.2009
(73) Patentinhaber: BSH Hausgeräte GmbH, 81739 München (DE)
(72) Erfinder: LAIBLE, Karl-Friedrich, 89129 Langenau (DE)
(86) Internationale Anmeldenummer: PCT/EP2007/058179
(87) Internationale Veröffentlichungsnummer: WO 2008/025657

(56) Entgegenhaltungen:
- DE-U1- 20 305 634
- JP-A- 9 269 176
- NL-A- 7 401 522
- US-A- 3 167 931
- US-A- 3 952 542
- US-A- 4 569 208
- US-B1- 6 397 620

## Beschreibung

Die vorliegende Erfindung betrifft ein Kältegerät wie etwa einen Kühl- oder Gefrierschrank mit einem Druckausgleichventil, das dazu dient, die Entstehung eines Unterdrucks im Innenraum des Kältegerätes zu verhindern.

Bei jedem Öffnen der Tür eines Kältegerätes gelangt warme Luft in dessen Innenraum, die sich nach dem Schließen der Tür darin abkühlt und einen Unterdruck erzeugt, durch den die Tür gegen die Frontseite des Korpus gesaugt wird. Dieser Unterdruck führt dazu, dass die Tür nach dem Schließen so lange sehr schwer wieder zu öffnen ist, bis der Druck zwischen Innenraum und Umgebung wieder ausgeglichen ist. Es kommt zwar nach längerer Zeit stets wieder zu einem Druckausgleich, da die herkömmlicherweise zwischen der Tür und der Frontseite des Korpus des Kältegerätes angebrachte Dichtung nicht vollkommen luftdicht schließt, doch ist man im Allgemeinen bestrebt, die Leckrate dieser Dichtung möglichst gering zu halten, da Luft, die über Lecks der Dichtung zwischen dem Innenraum und der Umgebung ausgetauscht wird, auch stets zu einem unerwünschten Eintrag von Wärme und Feuchtigkeit in den Innenraum führt. Je präziser das Kältegerät verarbeitet ist und um so kleiner folglich die Leckrate ist, um so länger hält der Unterdruck nach dem Schließen der Tür an.

Um das Problem zu lösen, sind diverse Türöffnungshilfemechanismen vorgeschlagen worden, die über einen Hebelmechanismus oder dergleichen eine von einem Benutzer zum Öffnen der Tür auf einen Türgriff ausgeübte Zugkraft verstärken, um die Tür entgegen einem eventuell im Innenraum herrschenden Unterdruck vom Korpus abzuspreizen.

Derartige Türöffnungsmechanismen umfassen notwendigerweise bewegliche Teile, die im Betrieb beträchtlichen Kräften ausgesetzt sind, so dass es zu Verschleiß und Störungen kommen kann.

Die US 3 167 931 offenbart ein Kältegerät gemäß dem Oberbegriff von Anspruch 1, das Dokument schlägt einen Kühlschrank vor, der mit einem Rückschlagventil ausgestattet ist, mittels welchem ein Öffnen einer Kühlschranktür erleichtert werden kann, indem mittels des Rückschlagventils ein Druckunterschied zwischen einem Innenraum und einer Umgebung des Kühlschranks verhindert wird.

Um die Tür jederzeit leicht öffnen zu können, ist ferner vorgeschlagen worden, in der Gehäusewand eines solchen Gerätes ein Druckausgleichsventil anzubringen, das im Falle von im Innenraum herrschendem Unterdruck Luft von außen nach innen nachfließen lässt und das sperrt, sobald der Druck zwischen der Umgebung und dem Innenraum ausgeglichen ist, so dass ein unkontrollierter Eintrag von Wärme und Feuchtigkeit in den Innenraum ausgeschlossen ist.

In der Praxis hat sich gezeigt, dass ein solches Druckausgleichsventil dazu neigt, im Laufe des Betriebs des Kältegerätes festzufrieren, so dass ein Druckausgleich über das Ventil nicht mehr stattfindet.

Aufgabe der Erfindung ist daher, ein Kältegerät mit einem Druckausgleichsventil zwischen Innenraum und Umgebung zu schaffen, bei dem die Gefahr des Festfrierens des Druckausgleichsventils beseitigt oder wenigstens vermindert ist.

Die Aufgabe wird erfindungsgemäß gelöst, dass das Druckausgleichsventil in thermischem Kontakt mit einer Wärmequelle steht, die es ermöglicht, das Druckausgleichsventil über den Gefrierpunkt des Wassers zu erwärmen.

Wenn eine Wand des Korpus oder der Tür, in der das Druckausgleichsventil eingesetzt ist, in an sich bekannter Weise eine feste Außenhaut, eine feste Innenhaut und eine zwischen diesen eingeschlossene Isolationsmaterialschicht umfasst, ist eine einfache und kostengünstige Montage des Druckausgleichsventils möglich, wenn dieses in einem die Isolationsmaterialschicht durchsetzenden und an Außen- und Innenhaut dicht anschließenden Rohr untergebracht ist, wobei das Rohr zwei ineinandergreifende Hülsen umfasst, von denen eine dicht an der Außenhaut und die andere dicht an der Innenhaut befestigt ist. Die ineinandergreifenden Hülsen erlauben durch Verschiebung in Längsrichtung eine bequeme Anpassung an unterschiedliche bzw. streuende Gehäusewandstärken. Die Hülsen können jeweils für sich dicht an der Außenhaut und der Innenhaut montiert werden, auch wenn der Abstand zwischen beiden variabel ist.

Es hat sich nämlich überraschenderweise gezeigt, dass das Zufrieren des Druckausgleichsventils in der Regel nicht auf Luftströme zurückgeht, die jeweils nach dem Schließen der Tür durch das Druckausgleichsventil fließen, sondern dass hierfür wesentlich langsamere Luftströme maßgeblich sind. Die Temperatur des Innenraumes des Kältegerätes ist, auch wenn die Tür geschlossen bleibt, nicht exakt konstant, sondern sie schwankt periodisch, und jede Abkühlung ist verbunden mit einem Zustrom von Luft in den Innenraum, während bei einer Erwärmung Luft abfließt, d.h. es kann bildhaft von einem "Einatmen" und "Ausatmen" des Kältegeräts gesprochen werden. Während bei einem Druckausgleich nach Türschließen die Luft zügig durch das Druckausgleichsventil strömt und darin enthaltene Feuchtigkeit kaum Gelegenheit hat, sich an dem Ventil abzusetzen, ist der Zustrom beim Einatmen erheblich langsamer, so dass die zuströmende Luft sich bereits im Druckausgleichsventil abkühlt und ihre Feuchtigkeit sich darin niederschlägt, mit der Folge, dass die Feuchtigkeit ausfriert und das Ventil seine Beweglichkeit verliert und verstopft.

Durch ein direktes oder indirektes Erwärmen des Druckausgleichsventils ist eine Eisbildung im Ventil und damit dessen Funktionsuntüchtigkeit sicher vermieden. Eine Möglichkeit das Ventil über den Gefrierpunkt des Wassers zu erwärmen ist durch eine Anordnung des Druckausgleichsventils im Bereich einer sogenannten Rahmenheizung bei Kältegeräten gegeben.

Eine solche Rahmenheizung ist bei vielen Kältegeräten vorgesehen, um durch Beheizen des eine Kältebrücke zwischen Innenraum und Umgebung bildenden Rahmens zu verhindern, dass dem Rahmen benachbarte Außenflächen des Korpus und/oder der Tür so stark abkühlen, dass sich Feuchtigkeit an ihnen niederschlägt. Indem das Druckausgleichsventil in thermischem Kontakt zu der Rahmenheizung angeordnet wird, kann ein Zufrieren des Ventils völlig ohne zusätzlichen Fertigungsaufwand verhindert werden.

Eine günstige Position für das Ventil, in der es durch die Rahmenheizung wirksam erwärmt werden kann, ist in einem dem Rahmen gegenüberliegenden Bereich der Tür.

Wenn der Rahmen in an sich bekannter Weise einen einer Magnetdichtung der Tür gegenüberliegenden ferromagnetischen Streifen aufweist, so ist es zweckmäßig, dass dieser Streifen einen lokal verbreiterten, dem Druckausgleichsventil gegenüberliegenden Abschnitt aufweist. So kann die gute Wärmeleitfähigkeit des Streifens genutzt werden, um das Ventil wirksam zu erwärmen.

Zweckmäßig ist auch, dass das Druckausgleichsventil in einer Ecke der Tür angebracht ist, da die Ecken im Allgemeinen die am schwächsten gekühlten Bereiche der Tür darstellen.

Vorzugsweise umfasst die Rahmenheizung eine von verdichtetem Kältemittel durchströmte Rohrleitung. Eine solche Rahmenheizung ist zwar nur dann zum Beheizen des Druckausgleichsventils wirksam, wenn gleichzeitig ein Verdichter arbeitet, der sie mit dem Kältemittel speist, doch beeinträchtigt dies die Wirksamkeit der Rahmenheizung als Schutz vor einem Zufrieren des Ventils in keiner Weise: Wenn der Verdichter nicht arbeitet und der Innenraum folglich nicht gekühlt ist, erwärmt er sich langsam. In dieser Zeit kann die Rahmenheizung zwar eventuell nicht verhindern, dass das Druckausgleichsventil unter den Gefrierpunkt abkühlt, doch verhindert die gleichzeitige Erwärmung des Innenraumes, dass Luft durch das Druckausgleichsventil in den Innenraum fließt, deren Feuchtigkeit sich in dem Druckausgleichsventil niederschlagen könnte. Daher besteht auch während dieser Zeiten keine Gefahr des Vereisens. Wenn der Verdichter wieder arbeitet und der Innenraum sich abkühlt, kann zwar wieder Luft durch das Druckausgleichsventil strömen, doch ist zu dieser Zeit das Druckausgleichsventil durch die Rahmenheizung beheizt.

Eine äußere der beiden Hülsen weist vorzugsweise einen in die Isolationsmaterialschicht hinein kegelig aufgeweiteten Einlassabschnitt auf. Dieser Einlassabschnitt erleichtert die Montage des Ventils, indem sie das Ineinanderschieben der zwei Hülsen erleichtert. Dies ist insbesondere wichtig beim Zusammenbau der Wand, die das Ventil enthält. Wenn zuerst jeweils eine Hülse in der Außenhaut und der Innenhaut der Wand befestigt werden, so müssen deren einander zugewandte Enden ineinander geschoben werden, bevor Außen- und Innenhaut miteinander verbunden werden können. Dieses Ineinanderschieben ist durch die Aufweitung erleichtert.

Wenn die äußere der beiden Hülsen die innere auf wenigstens einem Teil ihrer Länge spielhaltig umgibt, ist zur Abdichtung der Hülsen aneinander die innere Hülse vorzugsweise auf diesem Teil von einer an der äußeren Hülse anliegenden ersten ringförmigen Lippe umgeben.

Vorzugsweise ist diese Lippe an einer der Isolationsmaterialschicht zugewandten Seite konkav, so dass sie durch den Druck des expandierenden Isolationsmaterials gegen die äußere Hülse gedrückt wird, was den dichten Anschluss der Lippe an die äußere Hülse begünstigt.

Die Hülsen können an der Innen- bzw. Außenhaut befestigt sein, indem die Hülse die betreffende Öffnung durchsetzt und an einer Außenseite der Außenhaut oder Innenhaut anliegende Vorsprünge und eine an einer der Isolationsmaterialschicht zugewandten Innenseite der Außenhaut oder Innenhaut anliegende zweite ringförmige Lippe trägt. So ist die Außen- oder Innenhaut zwischen den Vorsprüngen und der umlaufenden Lippe eingeklemmt, und die Lippe verhindert gleichzeitig, dass Isolationsmaterial die Ränder der Öffnung erreichen und an diesen austreten kann.

Das Ventil umfasst vorzugsweise ein in der inneren Hülse aufgenommenes, geknicktes elastisches Blatt mit an der Innenseite der Hülse anliegenden Rändern.

Zur Sicherung des Blattes in der Hülse kann vorgesehen sein, dass ein Balken sich diametral durch die innere Hülse erstreckt und das Blatt rittlings auf dem Balken sitzt. Des Weiteren kann zur Sicherung des Blattes ein Überwurfteil an einem Ende der Hülse befestigt sein, das den freien Querschnitt der Hülse einschränkt, so dass das Blatt nicht entweichen kann.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Ansicht eines erfindungsgemäßen Kältegerätes, bei der die Außenseite der Tür des Kältegerätes sichtbar ist;
- Fig. 2: eine perspektivische Ansicht des Kältegerätes, bei der die Tür weit geöffnet ist, so dass ihre Innenseite sichtbar ist;
- Fig. 3: einen Schnitt durch Teile einer Seitenwand und der Tür des Kältegerätes entlang einer in Fig. 2 mit III bezeichneten Ebene;
- Fig. 4: einen zu Fig. 3 analogen Schnitt entlang einer in Fig. 2 mit IV bezeichneten Ebene;
- Fig. 5: ein in dem Kältegerät verwendetes Druckausgleichsventil, teils im Schnitt und teils in perspektivischer Ansicht; und
- Fig. 6: ein vergrößertes Detail der Fig. 1.

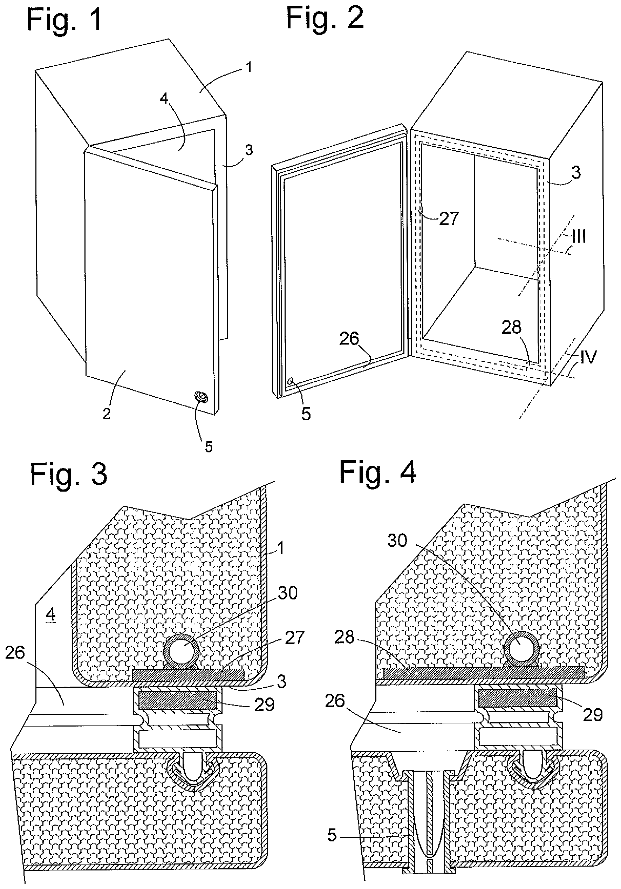

Fig. 1 zeigt ein Gehäuse für ein Kältegerät mit einem Korpus 1 und einer an den Korpus angelenkten, in einer teiloffenen Stellung dargestellten Tür 2. Ein Druckausgleichsventil 5 ist in einer unteren Ecke der Tür 2 angeordnet und erstreckt sich zwischen Vorderseite und Rückseite der Tür 2.

Fig. 2 zeigt das gleiche Gehäuse mit der Tür 2 in einer weiter geöffneten Stellung, in der deren dem Innenraum 4 des Gerätes zugewandte Rückseite sichtbar ist. An der Rückseite ist eine Magnetdichtung 26 rahmenförmig angeordnet, die bei geschlossener Tür 2 an dem Rahmen 3 des Korpus 1 dicht anliegt.

Um der Magnetdichtung 26 Halt zu bieten, kann der Rahmen 3 aus einem ferromagnetischen Blech geformt sein; hier wird exemplarisch der Fall betrachtet, dass der aus Kunststoff geformte Rahmen 3 schaumseitig mit einem Streifen 27 aus ferromagnetischem Metall hinterlegt ist, dessen Verlauf in Fig. 2 durch gestrichelte Umrisse dargestellt ist. An einer unteren Ecke des Rahmens 3 weist der Streifen 27 eine einwärts gerichtete Ausbuchtung 28 auf, die bei geschlossener Tür dem Druckausgleichsventil 5 gegenüberliegt.

Fig. 3 zeigt einen Schnitt durch einen vorderen Bereich einer Seitenwand des Korpus 1 und einen benachbarten Bereich der Tür 2 in Höhe der in Fig. 2 mit III bezeichneten Ebene. Eine mit magnetischem Material gefüllte Kammer 29 der Magnetdichtung 26 liegt dem Band 27 gegenüber, das an einer Innenseite des Rahmens 3 in isolierendes Schaummaterial eingebettet ist. Auf der Rückseite des Streifens 27 ist eine Kältemittelleitung 30 verlötet, die sich von einem (nicht dargestellten) Verdichter rings um den Innenraum 4 zu einem (ebenfalls nicht dargestellten) Verflüssiger erstreckt. Wenn der Verdichter in Betrieb ist, zirkuliert in der Kältemittelleitung 30 warmes Kältemittel, das den Rahmen 3 vor allem unmittelbar gegenüber der Magnetdichtung 26 und außerhalb von dieser sowie über die Magnetdichtung 26 einen Randbereich der Tür 2 erwärmt.

Fig. 4 zeigt einen zu Fig. 3 analogen Schnitt entlang der in Fig. 2 mit IV bezeichneten Ebene. Die Schnittebene verläuft durch das Druckausgleichsventil 5 und die diesem gegenüberliegende Ausbuchtung 28. Wärme, die bei laufendem Verdichter über die Ausbuchtung 28 abgegeben wird, verhindert ein Gefrieren des Druckausgleichsventils 5.

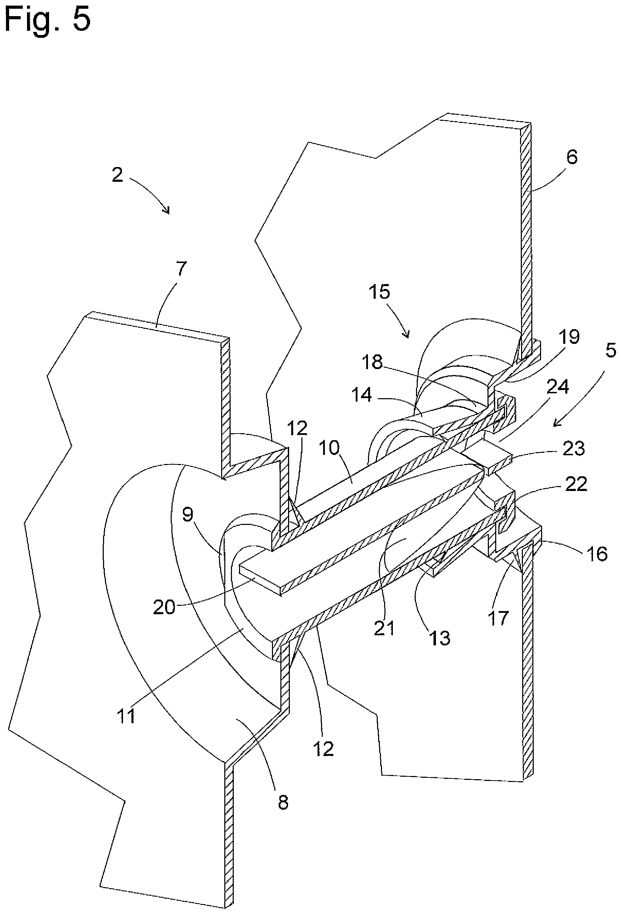

Fig. 5 zeigt das Druckausgleichsventil 5 und dessen Umgebung teils im Schnitt, teils in perspektivischer Ansicht. Ein Stück der metallischen Außenhaut der Tür 2 ist mit 6 bezeichnet. Eine Innenhaut ist durch eine aus Kunststoff tiefgezogene Schale gebildet, die an ihren nicht gezeigten Rändern mit dem Blech der Außenhaut dicht verbunden ist. Ein Ausschnitt des Innenbehälters ist mit 7 bezeichnet.

Am Boden einer in dem Innenbehälter 7 angezogenen Vertiefung 8 ist eine Öffnung 9 geschnitten, die die Form eines Kreises, vermindert um zwei Segmente an gegenüberliegenden Seiten, hat. Durch die Öffnung 9 ist vor dem Zusammenfügen des Innenbehälters 7 mit der Außenhaut 6 von der vom Betrachter abgewandten Seite her eine erste Hülse 10 eingeführt und verriegelt worden. Die Hülse 10 ist an ihrem dem Betrachter zugewandten Ende mit einem Flansch 11 versehen, der wie die Öffnung 9 die Form eines Kreises mit weggelassenen seitlichen Segmenten hat und daher in einer zur dargestellten Orientierung um 90° gedrehten Orientierung durch die Öffnung 9 hindurchpasst und in der dargestellten Orientierung an ihr verriegelt ist.

Der Innenbehälter 7 ist in der gezeigten Konfiguration zwischen dem Flansch 11 und einem elastisch gegen die der Außenhaut zugewandten Seite des Innenbehälters 7 drückenden Ringflansch 12 geklemmt. Der Außendurchmesser des Ringflansches 12 ist größer als der der Öffnung 9, so dass - in Fig. 2 nicht gezeigtes - Isolationsmaterial, das den Zwischenraum zwischen Außenhaut 6 und Innenbehälter 7 ausfüllt, nicht an die Öffnung 9 gelangen kann.

Ein zweiter Ringflansch 13 von kleinerem Durchmesser als der erste Ringflansch 12 ist an der Hülse 10 benachbart zu deren der Außenhaut 6 zugewandten Ende gebildet. Dieser Ringflansch 13 liegt elastisch an der Innenseite eines kegelförmig aufgeweiteten Abschnitts 14 einer zweiten Hülse 15 an. Die Hülse 15 ist in derselben Weise wie die Hülse 10 an der Außenhaut 6 befestigt, indem sie diese zwischen einem an der Außenseite der Außenhaut 6 anliegenden Flansch 16 und einem an der Innenseite anliegenden elastischen Ringflansch 17 klemmt. Die Elastizität des Ringflansches 13 gestattet während des Zusammenbaus eine Verschiebung der zwei Hülsen 10, 15 gegeneinander, durch die eine variable Stärke der Tür kompensierbar ist.

Auch die Hülse 15 wird an der Außenhaut 6 vor deren Zusammenbau mit dem Innenbehälter 7 montiert. Wenn Außenhaut 6 und Innenbehälter 7 miteinander verbunden werden, begünstigt die aufgeweitete Gestalt des Abschnitts 14 das Eindringen der Hülse 10 in die Hülse 15.

An den Abschnitt 14 schließt sich ein kurzer zylindrischer Abschnitt 18 der Hülse 15 an, in welchem die Hülse 10 formschlüssig gehalten ist.

Das freie Ende der Hülse 10 reicht bis in eine becherartige Aufweitung 19 der Hülse 15 hinein, die sich an den zylindrischen Abschnitt 18 anschließt und die den Flansch 16 und den Ringflansch 17 trägt.

Durch das Einschieben in den kegelförmigen Abschnitt 14 ist der Ringflansch 13 der Hülse 10 elastisch zurückgebogen, so dass die dem Isolationsmaterial zugewandte Oberfläche des Ringflansches 13 eine konkave Gestalt einnimmt. So wird der Ringflansch 13, wenn beim Ausschäumen des Hohlraumes zwischen Außenhaut 6 und Innenbehälter 7 Druck darauf wirkt, an den kegelförmigen Abschnitt 14 angedrückt, was die Dichtwirkung des Ringflansches 13 noch verbessert.

Das Innere der Hülse 10 ist durch eine Längswand 20 diametral unterteilt. Auf der Längswand 20 ist ein elastisches Blatt 21 aus Kunststoff rittlings gehalten. Das Blatt 21 ist von im Wesentlichen elliptischer Gestalt, so dass seine Ränder sich gut auf ihrer gesamten Länge dicht an die Hülse 10 anschmiegen können. Im Falle eines Unterdrucks im Innenraum 4 werden die Ränder des Blattes 21 gegen die Längswand 20 gedrückt, und Luft kann von außen nach innen nachfließen. Ein eventueller Überdruck im Innenraum 4 wirkt gegen die gesamte Oberfläche des Blattes 21 und drückt dieses nach außen bzw. gegen die Hülse 10. Ein durch eine nicht im Detail dargestellte Bajonettkupplung am freien Ende der Hülse 10 verankertes Überwurfteil 22 verhindert, dass das Blatt 21 von dem internen Überdruck aus der Hülse 10 herausgeschoben werden kann, zum einen, indem das Überwurfteil 22 den freien Querschnitt der Hülse 10 verengt, zum anderen durch einen Querbalken 23, der sich diametral durch eine zentrale Öffnung 24 des Überwurfteiles 22 erstreckt.

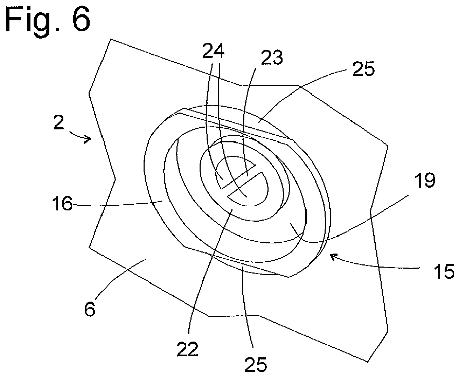

In der in Fig. 6 gezeigten Außenansicht des Ventils erkennt man die Aufweitung 19 der Hülse 15 mit dem an der Außenseite der Außenhaut 6 anliegenden Flansch 16, Teile einer Öffnung 25 der Außenhaut, in die die Hülse 15 eingesetzt ist, sowie das Überwurfteil 22 im Inneren der Aufweitung 19.

## Patentansprüche

1. Kältegerät mit einem Korpus (1) und einer an den Korpus (1) angeschlagenen Tür (2), die einen wärmeisolierten Innenraum (4) begrenzen, und mit einem Druckausgleichsventil (5), das einen Zufluss von Luft von außen in den Innenraum (4) zufässt und einen Abfluss von Luft aus dem Innenraum (4) sperrt, wobei das Druckausgleichsventil (1) in einem thermischen Kontakt mit einer Wärmequelle (27, 30) steht, die es ermöglicht, das Druckausgleichsventil (5) über den Gefrierpunkt des Wassers zu erwärmen, wobei das Druckausgleichsventil (5) in eine Wand des Korpus (1) oder der Tür (2) eingesetzt ist, die eine feste Außenhaut (6), eine feste Innenhaut (7) und eine zwischen diesen eingeschlossene Isolationsmaterialschicht umfasst, **dadurch gekennzeichnet dass** das Druckausgleichsventil (5) in einem die Isolationsmaterialschicht durchsetzenden und an Außen- und Innenhaut dicht anschließenden Rohr untergebracht ist, das zwei ineinandergreifende Hülsen (10, 15) umfasst, von denen eine dicht an der Außenhaut (6) und die andere dicht an der Innenhaut (7) befestigt ist.

2. Kältegerät nach Anspruch 1, **dadurch gekennzeichnet, dass** die Wärmequelle (27, 30) als elektrische Widerstandsheizung ausgebildet ist.

3. Kältegerät nach Anspruch 1, **dadurch gekennzeichnet, dass** die Wärmequelle (27, 30) als verdichterausgangsseitige Rohrleitung eines Kompressions-Kältemittel-Kreislaufes ausgebildet ist.

4. Kältegerät nach einem der Ansprüche 1 bis 3, **dadurch gekennzeichnet, dass** die Wärmequelle als Rahmenheizung (27, 30) eines der Tür (2) zugewandten frontseitigen Rahmens (3) des Korpus (1) ausgebildet ist, und dass das Druckausgleichsventil (5) in einem thermischen Kontakt mit der Rahmenheizung (27, 30) steht, die es ermöglicht, das Druckausgleichsventil (5) über den Gefrierpunkt des Wassers zu erwärmen.

5. Kältegerät nach einem der Ansprüche 1 bis 4, **dadurch gekennzeichnet, dass** das Druckausgleichsventil (5) in einem dem Rahmen (3) gegenüberliegenden Bereich der Tür (2) angebracht ist.

6. Kältegerät nach Anspruch 5, **dadurch gekennzeichnet, dass** der Rahmen (3) einen einer Magnetdichtung (26) der Tür gegenüberliegenden ferromagnetischen Streifen (27) aufweist und dass der Streifen (27) einen lokal verbreiterten, dem Druckausgleichsventil (5) gegenüberliegenden Abschnitt (28) aufweist.

7. Kältegerät nach einem der Ansprüche 1 bis 6, **dadurch gekennzeichnet, dass** das Druckausgleichsventil (5) in einer Ecke der Tür (2) angebracht ist.

8. Kältegerät nach einem der Ansprüche 1 bis 7, **dadurch gekennzeichnet, dass** die Rahmenheizung (27, 30) eine von verdichtetem Kältemittel durchströmte Rohrleitung (30) umfasst.

9. Kältegerät nach einem der Ansprüche 1 bis 8, **dadurch gekennzeichnet, dass** eine äußere (15) der beiden Hülsen (10, 15) einen in die Isolationsmaterialschicht hinein kegelig aufgeweiteten Einlassabschnitt (14) aufweist, in den die innere Hülse (10) eingeschoben ist.

10. Kältegerät nach einem der Ansprüche 1 bis 9, **dadurch gekennzeichnet, dass** die äußere (15) der beiden Hülsen (10, 15) die innere (10) auf wenigstens einem Teil (14) ihrer Länge spielhaltig umgibt, und dass die innere Hülse (10) auf diesem Teil von einer an der äußeren Hülse (15) anliegenden ersten ringförmigen Lippe (13) umgeben ist.

11. Kältegerät nach Anspruch 10, **dadurch gekennzeichnet, dass** die Lippe (13) an einer der Isolationsmaterialschicht zugewandten Seite konkav ist.

12. Kältegerät nach einem der Ansprüche 1 bis 11, **dadurch gekennzeichnet, dass** wenigstens eine der Hülsen (15, 10) eine Öffnung (25, 9) der Außenhaut (6) oder der Innenhaut (7) durchsetzt, an der diese Hülse (15, 10) befestigt ist, und dass die Hülse (15, 10) an einer Außenseite dieser Außenhaut (6) oder Innenhaut (7) anliegende Vorsprünge (16, 11) und eine an einer der Isolationsmaterialschicht zugewandten Innenseite der Außenhaut (6) oder Innenhaut (7) anliegende zweite ringförmige Lippe (17, 12) trägt.

13. Kältegerät nach einem der Ansprüche 1 bis 12, **dadurch gekennzeichnet, dass** das Ventil (5) ein in der inneren Hülse (10) aufgenommenes, geknicktes elastisches Blatt (21) mit an der Innenseite der Hülse (10) anliegenden Rändern umfasst.

14. Kältegerät nach Anspruch 13, **dadurch gekennzeichnet, dass** ein Balken (20) sich diametral durch die innere Hülse (10) erstreckt und das Blatt (21) rittlings auf dem Balken (20) sitzt.

15. Kältegerät nach Anspruch 13 oder 14, **dadurch gekennzeichnet, dass** das Blatt (21) in der inneren Hülse (10) durch ein an einem Ende der Hülse (10) befestigtes Überwurfteil (22) gesichert ist, das den freien Querschnitt der Hülse (10) einschränkt.

## Claims

1. Refrigerator with a body (1) and a door (2) which is attached to the body (1) and delimits a thermally-insulated interior space (4), and with a pressure-compensating valve (5) which permits an inflow of air from the outside into the interior space (4) and blocks an outflow of air out of the interior space (4), wherein the pressure-compensating valve (1) is in thermal contact with a heat source (27, 30) and this enables the pressure-compensating valve (5) to heat up to above the freezing point of water, wherein the pressure-compensating valve (5) is inserted into one wall of the body (1) or the door (2), which includes a solid outer skin (6), a solid inner skin (7) and a layer of insulating material enclosed therebetween, **characterised in that** it is possible for the pressure-compensating valve (5) to be accommodated in a tube passing through the layer of insulation material and tightly sealed at the outer skin and the inner skin, said tube having two interlocking sleeves (10, 15), one of which is tightly attached to the outer skin (6) and the other tightly attached to the inner skin (7).

2. Refrigerator according to claim 1, **characterised in that** the heat source (27, 30) is designed as electrical resistance heating.

3. Refrigerator according to claim 1, **characterised in that** the heat source (27, 30) is designed as piping on the output side of a compressor of a compressed refrigerant circuit.

4. Refrigerator according to one of claims 1 to 3, **characterised in that** the heat source is designed as frame heating (27, 30) of a front frame (3) of the body (1), facing the door (2), and that the pressure-compensating valve (5) is in thermal contact with the frame heating (27, 30), and this enables the pressure-compensating valve (5) to heat up to above the freezing point of water.

5. Refrigerator according to one of claims 1 to 4,'**characterised in that** the pressure-compensating valve (5) is mounted in an area of the door (2) opposite the frame (3).

6. Refrigerator according to claim 5, **characterised in that** the frame (3) has a ferromagnetic strip (27) opposite a magnetic seal (26) of the door, and that the strip (27) has a locally widened section (28) opposite the pressure-compensating valve (5).

7. Refrigerator according to one of claims 1 to 6, **characterised in that** the pressure-compensating valve (5) is mounted in one corner of the door (2).

8. Refrigerator according to one of claims 1 to 7, **characterised in that** the frame heating (27, 30) includes piping (30) through which compressed refrigerant passes.

9. Refrigerator according to one of claims 1 to 8, **characterised in that** the outer (15) of the two sleeves (10, 15) has a conical inlet section (14) into which the inner sleeve (10) is inserted and which opens into the layer of insulating material.

10. Refrigerator according to one of claims 1 to 9, **characterised in that** the outer (15) of the two sleeves (10, 15) encloses at least one part (14) of the length of the inner one (10) with some play, and that on this part the inner sleeve (10) is enclosed by a first annular lip (13) fitted to the outer sleeve (15).

11. Refrigerator according to claim 10, **characterised in that** the lip (13) is concave on one side facing the layer of insulating material.

12. Refrigerator according to one of claims 1 to 11, **characterised in that** at least one of the sleeves (15, 10) passes through an opening (25, 9) of the outer skin (6) or the inner skin (7) to which this sleeve (15, 10) is attached, and that the sleeve (15, 10) supports projections (16, 11) located at one outer side of this outer skin (6) or inner skin (7), and a second annular lip (17, 12) located at one inner side of the outer skin (6) or inner skin (7) facing the insulation material layer.

13. Refrigerator according to one of claims 1 to 12, **characterised in that** the valve (5) includes a bent flexible blade (21) accommodated in the inner sleeve (10), and having edges in contact with the inside of the sleeve (10).

14. Refrigerator according to claim 13, **characterised in that** a bar (20) extends diametrically through the inner sleeve (10) and the blade (21) sits astride the bar (20).

15. Refrigerator according to claim 13 or 14, **characterised in that** the blade (21) is secured in the inner sleeve (10) by a coupling part (22) attached to one end of the sleeve (10), said coupling part limiting the free cross-section of the sleeve (10).

## Revendications

1. Appareil frigorifique comprenant un corps (1) et une porte (2) montée sur le corps (1), lesquels délimitent un espace intérieur (4) thermiquement isolé, et comprenant une soupape de compensation de pression (5) qui permet une arrivée d'air dans l'espace intérieur (4) depuis l'extérieur et bloque une évacuation d'air hors de l'espace intérieur (4), la soupape de compensation de pression (5) étant en contact thermique avec une source de chaleur (27, 30) qui permet d'échauffer la soupape de compensation de pression (5) au-delà du point de congélation de l'eau, la soupape de compensation de pression (5) étant insérée dans une paroi du corps (1) ou de la porte (2), laquelle comprend une peau extérieure (6) rigide, une peau intérieure (7) rigide et une couche de matière d'isolation enfermée entre celles-ci, **caractérisé en ce que** la soupape de compensation de pression (5) est placée dans un tube traversant la couche de matière d'isolation et se raccordant de manière étanche à la peau extérieure et à la peau intérieure, lequel tube comprend deux douilles (10, 15) ayant prise l'une dans l'autre, dont une est fixée de manière étanche à la peau extérieure (6) et l'autre est fixée de manière étanche à la peau intérieure (7).

2. Appareil frigorifique selon la revendication 1, **caractérisé en ce que** la source de chaleur (27, 30) est réalisée en tant que chauffage par résistance électrique.

3. Appareil frigorifique selon la revendication 1, **caractérisé en ce que** la source de chaleur (27, 30) est réalisée en tant que conduite, côté sortie de compresseur, d'un circuit de refroidissement à compression.

4. Appareil frigorifique selon l'une quelconque des revendications 1 à 3, **caractérisé en ce que** la source de chaleur (27, 30) est réalisée en tant que cordon chauffant (28, 30), tourné vers la porte (2), d'un cadre (3) frontal du corps (1) et **en ce que** la soupape de compensation de pression (5) est en contact thermique avec le cordon chauffant (27, 30), lequel permet d'échauffer la soupape de compensation de pression (5) au-delà du point de congélation de l'eau.

5. Appareil frigorifique selon l'une quelconque des revendications 1 à 4, **caractérisé en ce que** la soupape de compensation de pression (5) est placée dans une zone de la porte (2) située à l'opposé du cadre (3).

6. Appareil frigorifique selon la revendication 5, **caractérisé en ce que** le cadre (3) présente une bande (27) ferromagnétique située à l'opposé d'un joint magnétique (26) de la porte et **en ce que** la bande (27) présente une section (28) localement élargie, opposée à la soupape de compensation de pression (5).

7. Appareil frigorifique selon l'une quelconque des revendications 1 à 6, **caractérisé en ce que** la soupape de compensation de pression (5) est placée dans un coin de la porte (2).

8. Appareil frigorifique selon l'une quelconque des revendications 1 à 7, **caractérisé en ce que** le cordon chauffant (27, 30) comprend une conduite (30) traversée par le fluide réfrigérant compresseur.

9. Appareil frigorifique selon l'une quelconque des revendications 1 à 8, **caractérisé en ce qu'**une douille extérieure (15) des deux douilles (10, 15) présente une section d'insertion (14) élargie de manière conique dans la couche de matière d'isolation, dans laquelle section d'insertion la douille intérieure (10) est enfoncée.

10. Appareil frigorifique selon l'une quelconque des revendications 1 à 9, **caractérisé en ce que** la douille extérieure (15) des deux douilles (10, 15) entoure la douille intérieure (10) sur au moins une partie (14) de sa longueur en maintenant le jeu, et **en ce que** la douille intérieure (10) est entourée sur cette partie par une première lèvre (13) annulaire adjacente à la douille extérieure (15).

11. Appareil frigorifique selon la revendication 10, **caractérisé en ce que** la lèvre (13) est concave sur un côté tourné vers la couche de matière d'isolation.

12. Appareil frigorifique selon l'une quelconque des revendications 1 à 11, **caractérisé en ce qu'**au moins une des douilles (10, 15) traverse une ouverture (25, 9) de la peau extérieure (6) ou de la peau intérieure (7), sur laquelle cette douille (15, 10) est fixée, et **en ce que** la douille (15, 10) porte des saillies (16, 11), adjacentes à un côté extérieur de cette peau extérieure (6) ou de cette peau intérieure (7), et une deuxième lèvre (17, 12) annulaire adjacente à un côté intérieur, tourné vers la couche de matière d'isolation, de la peau extérieure (6) ou de la peau intérieure (7).

13. Appareil frigorifique selon l'une quelconque des revendications 1 à 12, **caractérisé en ce que** la soupape (5) comprend une lame (21) élastique pliée, logée dans la douille intérieure (10), avec des bords adjacents au côté intérieur de la douille (10).

14. Appareil frigorifique selon la revendication 13, **caractérisé en ce qu'**une barre (20) s'étend diamétralement à travers la douille intérieure (10) et **en ce que** la lame (21) est placée à califourchon sur la barre (20).

15. Appareil frigorifique selon la revendication 13 ou 14, **caractérisé en ce que** la lame (21) est bloquée dans la douille intérieure (10) par une pièce de raccordement (22) fixée sur une extrémité de la douille (10), laquelle pièce de raccordement restreint la section libre de la douille (10).
